# EUROPEAN PATENT SPECIFICATION

(11) **EP 0 350 153 B1**
(45) Date of publication and mention of the grant of the patent: **19.07.1995**
(21) Application number: 89304525.2
(22) Date of filing: 05.05.1989
(51) Int. Cl.: G01P 15/09, G01P 15/125

(54) **Piezoelectric physical quantity detector**
Piezoelektrischer Messaufnehmer für eine physikalische Grösse
Capteur piézo-électrique de quantité physique

(30) Priority: 09.05.1988 JP 110533/88
(43) Date of publication of application: 10.01.1990
(73) Proprietor: HITACHI, LTD., Chiyoda-ku, Tokyo 100 (JP)
(72) Inventor: Ueno, Sadayasu, Katsuta-shi Ibaraki 312 (JP)
(74) Representative: Molyneaux, Martyn William

(56) References cited:
- DE-B- 1 270 603
- GB-A- 861 325
- US-A- 3 201 984
- US-A- 3 667 300
- US-A- 3 712 109
- PATENT ABSTRACTS OF JAPAN, vol. 11, no. 285 (P-616)[2732], 16th September 1987; & JP-A-62 81 572 (MURATA MFG. CO., LTD) 15.04.1987
- PATENT ABSTRACTS OF JAPAN, vol. 8, no. 228 (P-308)[1665], 19th October 1984; & JP-A-59 108 928 (MURATA) 23.06.1984
- PATENT ABSTRACTS OF JAPAN, vol. 10, no. 41 (P-429)[2098], 18th February 1986; & JP-A-60 187 834 (HITACHI) 25.09.1985

## Description

### Background of the Invention

This invention relates to a detector for detecting a physical quantity such as motion and stress by use of a piezoelectric device and more particularly to a driving system of a piezoelectric detector capable of measuring signals of physical quantities having a low frequency range including D.C..

Conventionally, a piezoelectric device has been used as a detector of acceleration vibration or the like. In Japanese Patent Laid-open No. 62-81572 (1987), for example, detection can be made down to a low frequency by polarization in parallel with a main plane of the piezoelectric. As another prior art example, Japanese Patent Laid-open No. 61-270665 (1986) makes it possible to detect the acceleration down to a low frequency by use of a center fixed type piezoelectric device.

However, the conventional technique stated above has the drawback that measurement of the frequency component of the acceleration to the D.C. is impossible since electrical charges generated by a stress applied to the piezoelectric device leaks because the impedance between the electrodes of the device is finite.

It is known from JP-A-60187834 to provide a bimorph piezoelectric member which is fixed at one end and free to vibrate at its other end. The bimorph piezoelectric member is connected via an impedance to a frequency oscillator for applying a frequency that is higher than the anti-resonant frequency of the piezoelectric member when maximum allowable external force is applied. The reference teaches that the impedance characteristic of the bimorph exhibits an extremely sharp change between the resonant point and the anti-resonant point of the bimorph. By virtue of the change in the frequency characteristic and hence impedance, when force is applied, so it is possible to measure the volt drop across the bimorph piezoelectric member to signify the force applied. The volt drop is amplified, rectified and applied to a differential amplifier. A voltage reference generator is connected to the reference terminal of the differential amplifier such that the differential amplifier provides zero output when no force is applied to the bimorph. Any output voltage at the output of the differential amplifier is representative of the force applied. Thus, the output voltage change is proportional to external force.

### SUMMARY OF THE INVENTION

An object of the present invention is to provide a piezoelectric detector which makes it possible to measure a signal of physical quantity such as motion and stress in a detection range of low frequency including D.C. by use of a piezoelectric device.

According to a first aspect of this invention there is provided a piezoelectric detector for detecting a physical quantity as claimed in claim 1 herein.

According to a further aspect of this invention there is provided a piezoelectric detector as in claim 5 hereinbelow.

Therefore, in the present invention, as the charge generated by the stress applied to the piezoelectric device is changed to plus or minus according to the carrier A.C., the charge does not leak from the electrode of the piezoelectric device and can be amplified and taken out in the frequency range of very low frequency including D.C.

### BRIEF DESCRIPTION OF THE DRAWINGS

Figure 1 is a block wiring diagram showing an embodiment of the present invention; and
Figure 2 is a block wiring diagram showing another embodiment of the present invention.

### DESCRIPTION OF THE PREFERRED EMBODIMENTS

Hereinafter, embodiments of the present invention will be described with reference to the drawings.

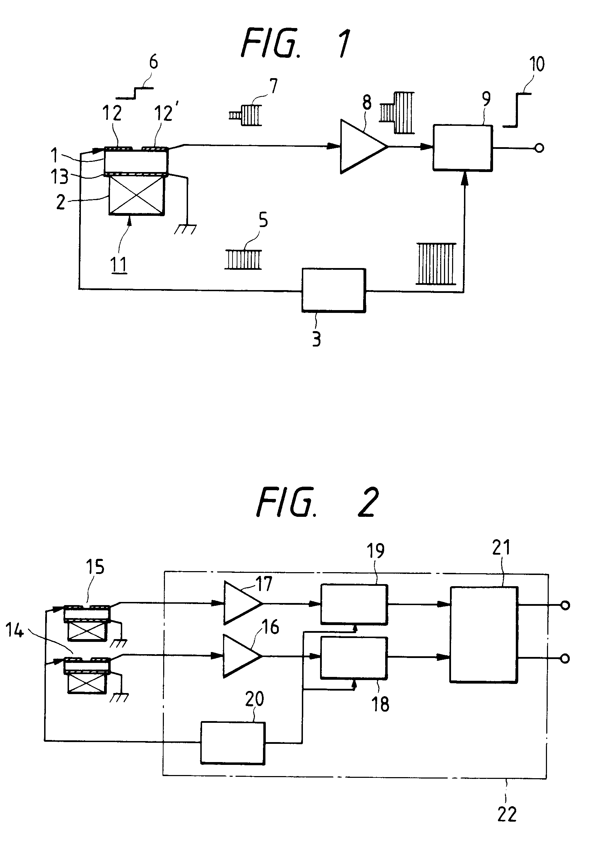

Figure 1 shows a first embodiment of an acceleration detector. A detection unit 11 is formed by a disc-like piezoelectric device 1, opposed electrodes 12, 12′ and 13, and a weight 2 which is mechanically coupled with the device 1 through the electrode 13 in close contact. A carrier A.C. voltage 5 is applied to the electrode 12 from an excitation power source 3. An acceleration step signal 6 occurring between the opposed electrodes 12 and 13 of the piezoelectric device modulates the carrier A.C. so as to generate a modulated output signal 7 from the electrode 12′, and is amplified by an A.C. amplifier 8 and thereafter detected synchronously by a demodulator 9. There is thus obtained the amplified acceleration step signal 10 from the demodulator.

In Figure 1 the electrode 12 is separated from the electrode 12′.

Figure 2 shows another embodiment wherein two systems of acceleration detectors are fitted to a body of a vehicle in order to determine the vector of motion of the vehicle on a real time basis from the acceleration components in the moving direction of the vehicle and the perpendicular direction thereto. This apparatus can be used, for example, for determining the angle of inclination of a slope and a horizontal component of a car speed when the vehicle travels on the slope at a low speed or for determining the angle of inclination of the car body and the car speed relative to the ground when abrupt acceleration/deceleration is made on a horizontal road. In the Figure 2, reference numeral 14 and 15 represent the acceleration detection units in the moving direction of the vehicle and in the perpendicular direction thereto, respectively, 16 and 17 are their A.C. amplifiers, 18 and 19 are their demodulators and 20 is an excitation power source, which is used in common for the two systems of acceleration detectors. Reference numeral 21 represents an operation unit for operating the output signal levels of the two systems, whereby the inclination angle of the slope, the inclination angle of the vehicle and the car speed to the ground are determined. Reference numeral 22 represents schematically the state where the driving circuit portions of the two systems of the acceleration detectors and the operational processing units of the output signals are disposed on a common substrate.

In a preferred embodiment of the invention the frequency of the carrier A.C. is above audio frequency and the frequency of the carrier A.C. is substantially a resonance frequency of the piezoelectric device.

As described above, the present invention can measure the frequency detection range of the physical quantities such as motion and stress to the D.C. component. Though using a simple driving circuit construction, the present invention can not only detect economically the physical quantities at a plurality of positions but can also provide a detector which is highly resistant to disturbance such as an electro-magnetic interference.

## Claims

1. A piezoelectric detector for detecting a physical quantity comprising:
a piezoelectric device (1) having a first electrode (12) and a second electrode (12′) spaced from said first electrode, both on one surface of the piezoelectric device, and a third electrode on the other surface of the piezoelectric device for modulating an amplitude of a carrier A.C.,
an excitation power source (3) for supplying the carrier A.C. between the first electrode (12) and the third electrode so as to excite the piezoelectric device,
a weight (2) mechanically coupled to the piezoelectric device for applying the physical quantity to the piezoelectric device so as to modulate the amplitude of the carrier A.C. with the physical quantity,
an A.C. amplifier (8) for amplifying a modulated output (7) from the second electrode (12′), and
a demodulator (9) for demodulating an amplified output (7) from the A.C. amplifier.

2. A piezoelectric detector for detecting a physical quantity according to claim 1 wherein said demodulator (9) is arranged to demodulate the amplified output from the A.C. amplifier (8) by using the carrier A.C. supplied from the excitation power source (3).

3. A piezoelectric detector for detecting a physical quantity according to any preceding claim wherein the frequency of said carrier A.C. is above audio frequency.

4. A piezoelectric detector for detecting a physical quantity according to claim 1 wherein a frequency of said carrier A.C. is substantially a resonance frequency of the piezoelectric device.

5. A piezoelectric detector for detecting a physical quantity comprising:
first and second piezoelectric devices (14, 15) each having a first electrode (12) and a second electrode (12′) spaced from said first electrode, both the first and second electrodes being mounted on one surface of the respective piezoelectric device, and a third electrode on the other surface of said respective piezoelectric device for modulating an amplitude of a carrier A.C.,
an excitation power source (20) for supplying the carrier A.C. between the first electrodes (12) and the third electrodes of the respective piezoelectric devices so as to excite the piezoelectric devices,
weights (2) mechanically coupled to respective piezoelectric devices for adding a first vector component of the physical quantity to the first electrode of the piezoelectric devices and for adding second vector component which is a perpendicular component to the first vector component of the physical quantity to the second of the piezoelectric devices so as to modulate the amplitude of the carrier A.C. with the physical quantity,
A.C. amplifiers (16, 17) for respectively amplifying modulated outputs from the second electrodes (12′), and
demodulators (18, 19) for respectively demodulating amplified outputs from the A.C. amplifiers.

## Patentansprüche

1. Piezoelektrischer Meßaufnehmer für eine physikalische Größe, mit:
einer piezoelektrischen Vorrichtung (1) mit einer ersten Elektrode (12) und einer zu der ersten Elektrode beabstandeten zweiten Elektrode (12′), die sich beide an einer Oberfläche der piezoelektrischen Vorrichtung befinden, und mit einer dritten Elektrode an der anderen Oberfläche der piezoelektrischen Vorrichtung, zur Modulation einer Amplitude eines Trägerwechselstroms;
einer Erregerstromquelle (3) für die Zufuhr des Trägerwechselstroms zwischen der ersten Elektrode (12) und der dritten Elektrode, um die piezoelektrische Vorrichtung zu erregen;
einem Gewicht (2), das mechanisch mit der piezoelektrischen Vorrichtung gekoppelt ist, um der piezoelektrischen Vorrichtung die physikalische Größe zuzuführen, um die Amplitude des Trägerwechselstroms durch die physikalische Größe zu modulieren;
einem Wechselstromverstärker (8) zur Verstärkung einer modulierten Ausgabe (7) der zweiten Elektrode (12′); und
einem Demodulator (9) zur Demodulation einer verstärkten Ausgabe (7) des Wechselstromverstärkers.

2. Piezoelektrischer Meßaufnehmer für eine physikalische Größe nach Anspruch 1, dadurch gekennzeichnet, daß der Demodulator (9) so angeordnet ist, daß er die verstärkte Ausgabe des Wechselstromverstärkers (8) unter Verwendung des von der Erregerstromquelle (3) zugeführten Trägerwechselstroms demoduliert.

3. Piezoelektrischer Meßaufnehmer für eine physikalische Größe nach einem der vorstehenden Ansprüche, dadurch gekennzeichnet, daß die Frequenz des Trägerwechselstroms oberhalb der hörbaren Frequenz liegt.

4. Piezoelektrischer Meßaufnehmer für eine physikalische Größe nach Anspruch 1, dadurch gekennzeichnet, daß eine Frequenz des Trägerwechselstroms im wesentlichen eine Resonanzfrequenz der piezoelektrischen Vorrichtung ist.

5. Piezoelektrischer Meßaufnehmer für eine physikalische Größe, mit:
ersten und zweiten piezoelektrischen Vorrichtungen (14, 15), die jeweils eine erste Elektrode (12) und eine zu der ersten Elektrode beabstandete zweiten Elektrode (12′) aufweisen, wobei die ersten und zweiten Elektroden an einer Oberfläche der entsprechenden piezoelektrischen Vorrichtung angebracht sind, und mit einer dritten Elektrode an der anderen Oberfläche der entsprechenden piezoelektrischen Vorrichtung, zur Modulation einer Amplitude eines Trägerwechselstroms;
einer Erregerstromquelle (20) für die Zufuhr des Trägerwechselstroms zwischen den ersten Elektroden (12) und den dritten Elektroden, um die piezoelektrischen Vorrichtungen zu erregen;
Gewichten (2), die mechanisch mit den entsprechenden piezoelektrischen Vorrichtungen gekoppelt sind, um der ersten Elektrode der piezoelektrischen Vorrichtungen eine erste Vektorkomponente der physikalischen Größe zuzuführen und um der zweiten der piezoelektrischen Vorrichtungen eine zweite Vektorkomponente zuzuführen, die eine senkrechte Komponente zu dem Vektor der physikalischen Größe ist, um die Amplitude des Trägerwechselstroms durch die physikalische Größe zu modulieren;
Wechselstromverstärkern (16, 17) zur entsprechenden Verstärkung modulierter Ausgaben der zweiten Elektroden (12′); und
Demodulatoren (18, 19) zur entsprechenden Demodulation verstärkter Ausgaben der Wechselstromverstärker.

## Revendications

1. Détecteur piézoélectrique pour détecter une quantité physique comprenant :
un dispositif piézoélectrique (1) présentant une première électrode (12) et une deuxième électrode (12′) espacée de ladite première électrode, toutes deux sur une surface du dispositif piézoélectrique, et une troisième électrode sur l'autre surface du dispositif piézoélectrique pour moduler une amplitude d'une porteuse en courant alternatif,
une alimentation (3) en courant d'excitation pour fournir la porteuse en courant alternatif entre la première électrode (12) et la troisième électrode de façon à exciter le dispositif piézoélectrique,
un poids (2) couplé mécaniquement au dispositif piézoélectrique pour appliquer la quantité physique au dispositif piézoélectrique de façon à moduler l'amplitude de la porteuse en courant alternatif avec la quantité physique,
un amplificateur (8) en courant alternatif pour amplifier une sortie (7) modulée provenant de la deuxième électrode (12′), et
un démodulateur (9) pour démoduler une sortie (7) amplifiée provenant de l'amplificateur en courant alternatif.

2. Détecteur piézoélectrique pour détecter une quantité physique selon la revendication 1, dans lequel ledit démodulateur (9) est agencé pour démoduler la sortie amplifiée provenant de l'amplificateur (8) en courant alternatif en utilisant la porteuse en courant alternatif fournie par l'alimentation (3) en courant d'excitation.

3. Détecteur piézoélectrique pour détecter une quantité physique selon l'une quelconque des revendications précédentes, dans lequel la fréquence de ladite porteuse en courant alternatif est supérieure à la fréquence audio.

4. Détecteur piézoélectrique pour détecter une quantité physique selon la revendication 1, dans lequel une fréquence de ladite porteuse en courant alternatif est sensiblement une fréquence de résonance du dispositif piézoélectrique.

5. Détecteur piézoélectrique pour détecter une quantité physique comprenant :
des premier et deuxième dispositifs piézoélectriques (14, 15) présentant chacun une première électrode (12) et une deuxième électrode (12′) espacée de ladite première électrode, à la fois les première et deuxième électrode étant montées sur une surface du dispositif piézoélectrique respectif, et une troisième électrode sur l'autre surface dudit dispositif piézoélectrique pour moduler une amplitude d'une porteuse en courant alternatif,
une alimentation (20) en courant d'excitation pour fournir la porteuse en courant alternatif entre les premières électrodes et les troisièmes électrodes des dispositifs piézoélectriques respectifs de façon à exciter les dispositifs piézoélectriques,
des poids (2) couplés mécaniquement aux dispositifs piézoélectriques pour additionner une première composante de vecteur de la quantité physique à la première électrode des dispositifs piézoélectriques et pour additionner une deuxième composante de vecteur qui est une composante perpendiculaire au vecteur de la quantité physique au deuxième des dispositifs piézoélectriques de façon à moduler l'amplitude de la porteuse en courant alternatif avec la quantité physique,
des amplificateurs (16, 17) en courant alternatif pour amplifier respectivement des sorties modulées provenant des deuxièmes électrodes (12′), et
des démodulateurs (18, 19) pour démoduler respectivement des sorties amplifiées provenant des amplificateurs en courant alternatif.
